# EUROPEAN PATENT APPLICATION

(11) **EP 1 089 005 A1**
(43) Date of publication of application: **04.04.2001**
(21) Application number: 00830622.7
(22) Date of filing: 18.09.2000
(51) Int. Cl.: F16D 3/84, A01B 71/08

(54) **Cardan shaft with guard that can be fixed in position by a single action**

(30) Priority: 28.09.1999 IT FI990195
(71) Applicant: Bondioli, Edi, I-46029 Suzzara, Mantova (IT)
(72) Inventor: Bondioli, Edi, I-46029 Suzzara, Mantova (IT)
(74) Representative: Mannucci, Michele

(57) **Abstract**

The two telescopically sliding sheaths (21, 23) of the guard are coupled by splined profiling (23S, 52A) to prevent relative angular movement, so that only one chain (30) is required to prevent spontaneous rotation of the guard.

## Description

The invention relates to a cardan shaft with a safety guard which is improved to simplify fitting and make it more reliable in use.

Present-day cardan shafts - especially those that are telescopic - possess a guard that comprises two telescopic sheaths around the shaft and protective boots around the shaft end-forks belonging to the respective universal joints; said guard is supported by the base of each of said forks. In order to prevent spontaneous rotation of the guard, there must be two chains with which the two parts forming the guard must be fixed, each to its own hook provided on the two structures connected by the cardan shaft. This necessitates two separate operations and special components to carry them out, in practice two chains, and some suitable point must be found on each structure to which they can be fixed.

The invention avoids these problems by means of an improvement to the guard which can be carried out easily and inexpensively and in such a way as to avoid a double hooking operation.

These and other objects and advantages will become clear in the course of the text that follows.

According to the invention, the two telescopically sliding sheaths of the guard are coupled by splined profiling to prevent relative angular movement, so that only one chain is required to prevent spontaneous rotation of the guard.

In practice, and advantageously, only the inner protective sheath is made with splined profiling, whereas a sleeve with teeth that lock into and slide along the splined profiling of the inner protective sheath is engaged on the end of the other or outer protective sheath, which is a cylinder of circular section.

Said sleeve can be engaged on said outer protective sheath by means of holes in the wall of the sheath and chamfered pins in the sleeve, in other words in an equivalent arrangement to that used to fix the sheath to the boot.

The inner protective sheath with the splines can easily be made by drawing, with an essentially constant thickness, and may have pairs of splines distributed at regular intervals around the circular cross section to provide stability in the angular coupling.

The invention will be understood more clearly examining the description and attached drawing, the latter showing a practical and non-restrictive example of the invention. In the drawing:
Fig. 1 shows a complete view of a cardan shaft with the guard, which comprises two sheaths and two boots shown in section;
Figs 2 and 3 show in isolation the outer one of the two sheaths in side view and in section on III-III as marked in Fig. 2;
Figs 4-8 show in isolation a sleeve for application to the sheath of Figs 1 and 2, in a diametrical cross section, in sections on V-V and VI-VI as marked in Fig. 4, and in sections on VII-VII as marked in Fig. 5 and VIII-VIII as marked in Fig. 6;
Figs 9, 10 and 11 show in isolation the second or inner of the two sheaths in a side view and in sections on X-X and XI-XI as marked in Fig. 9;

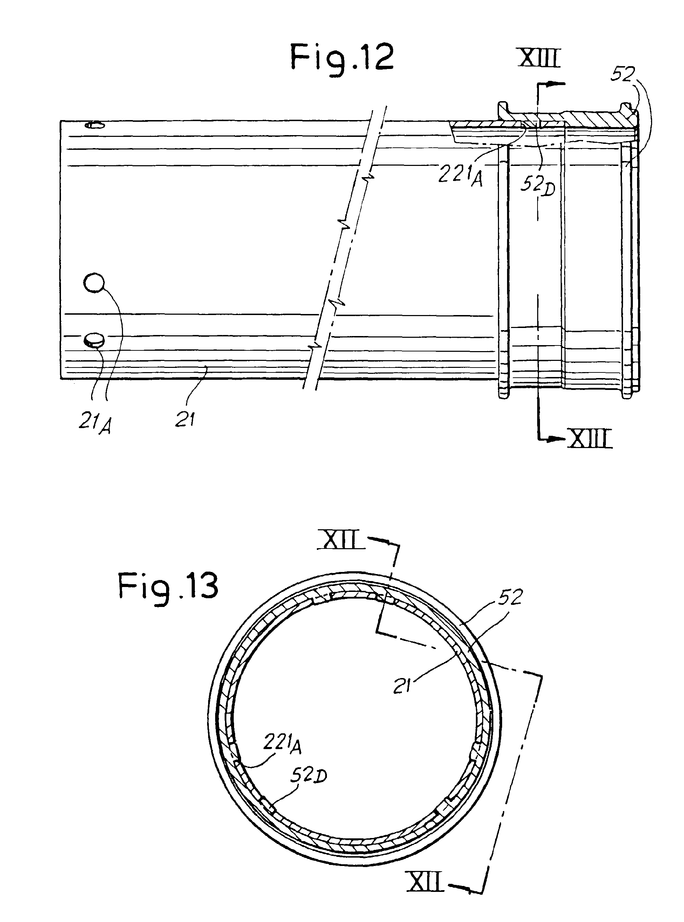

Figs 12 and 13 show the first of the two sheaths with the sleeve mounted on it, in an external view and in partial section as indicated by broken line XII-XII in Fig. 13, and in section on XIII-XIII as marked in Fig. 12; and

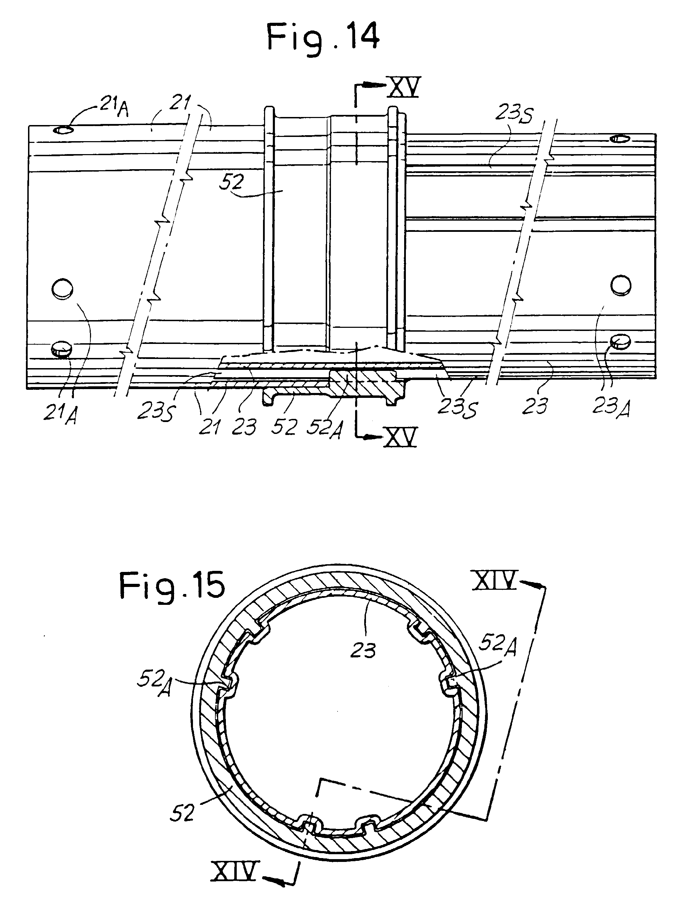

Figs 14 and 15 show the two sheaths and the sleeve in the assembled position, in side view and partial section on broken line XIV-XIV as marked in Fig. 15 and in section XV-XV as marked in Fig. 14.

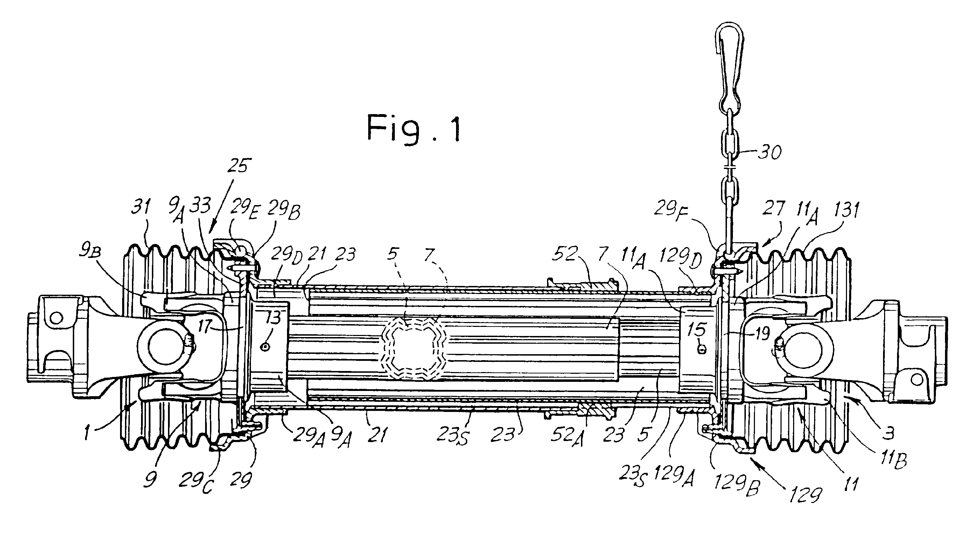

The accompanying drawing (see in particular Fig. 1) shows a cardan shaft with guard, which is based on that described in the Italian patent no. 1,286,698 filed on 14.08.96, and in the corresponding European patent no. 0,918,952. The numbers 1 and 3 denote two universal joints belonging to the cardan shaft illustrated, which comprises two segments of tubular shafts 5 and 7 of non-circular section (as seen in Fig. 1), thus being capable of forming an angular but telescopically-sliding coupling integral with two forks 9 and 11, respectively, belonging to the respective universal joints 1 and 3. These segments 5 and 7 are housed in axial housings recessed into the base 9A of the fork 9 and into the base 11 A of the fork 11 and are engaged with pins 13, 15, respectively, inserted diametrically through the base 9A, 11A, respectively, of the fork and through the segments 5, 7, respectively. The bases 9A and 11A of the forks 9 and 11, respectively are of circular cross section as far as the arms 9B and 11 B of the forks 9 and 11, respectively, and channels 17 and 19, respectively, are formed in said bases 9A and 11 A adjacent to the origin of the arms 9B and 11B.

The annular channels 17 and 19 support the protective boots 25 and 27 of the universal joints 1 and 3. These boots form part of the protection of the rotating shaft 1, 3, 5, 7. This protection also includes tubular sheaths 21 and 23 which are capable of sliding with respect to each other as and when the segments 5 and 7 of the telescopic cardan drive shaft slide with respect to each other.

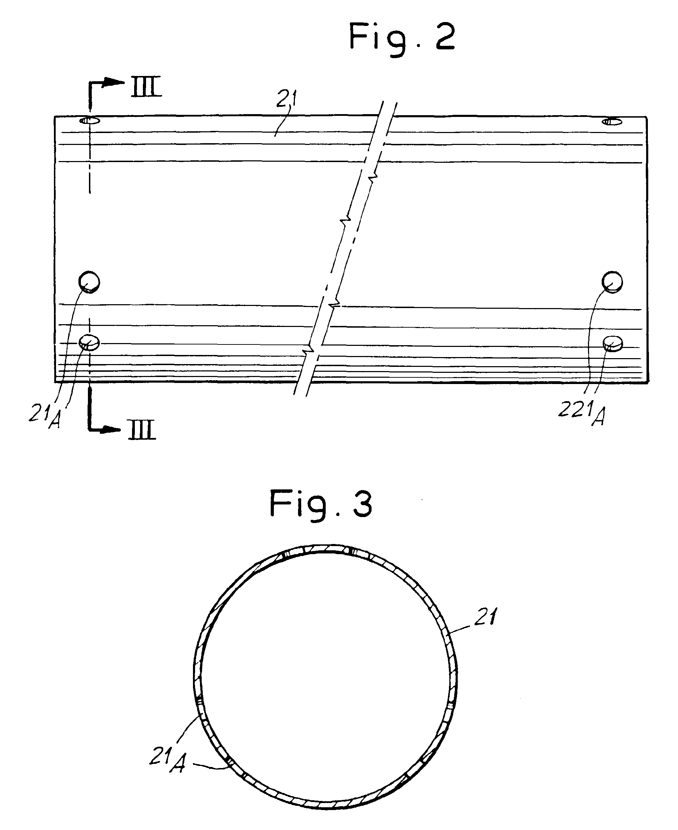

The protective boot 25 of the universal joint 1 (exactly equivalent to the protective boot 27 of the universal joint 3) comprises a rigid annular component 29 with a collar 29A for the insertion of the sheath 21, a flexible skirt 31 and a flat ring-like part 33. The tubular sheath 21, which is made of a slightly elastically deformable plastic, is fixed to the collar 29A by means of holes 21A in the sheath 21 (see Figs 2 and 3) and chamfered pins 29D projecting in from the collar 29A, which pins 29D are inserted through the holes 21A. The rigid annular component 29 possesses, in addition to the collar 29A for engagement on the tubular sheath 21, a transverse wall 29B, also annular, and an end annulus 29C. The component 29 includes an eye 29E for attachment of a chain such as 30 which is illustrated for the protective boot 27, containing a similar eye 29F. The flexible skirt 31 has an inward flange which fits against the transverse wall 29B and inside the end annulus 29C forming its support. The flat ring-like part 33 has a radial slit which interrupts the annular form of the part and other incisions to allow it to be inserted into the channel 17 and to form shoes for sliding relative to the flange 9, for which an oiler is also provided.

The arrangement of the protective boot 27 is exactly the same as described for the protective boot 25 and corresponding parts are partly identified by the same references augmented by the value 100.

In the conventional methods, such as that indicated in the introduction, the guard (25, 21, 23, 27) surrounding the cardan drive shaft is prevented from rotating accidentally by using two chains such as 30, which are attached to the eyes 29E, 29F and hooked to fixed members in the vicinity of the boots such as 31. This requires two chain-attaching operations, which in many cases creates difficulties in finding fixed members that can be used for the attachment, and a risk of incomplete operations due to possibly forgetting to carry out both attachments; if only one chain is attached, it is still possible to rotate the part of the guard whose chain has not been attached, leaving a risk of injury to the operators.

The above problems are avoided with the present invention by means of a simple, practical and also inexpensive solution which simplifies the operations and averts any potential danger.

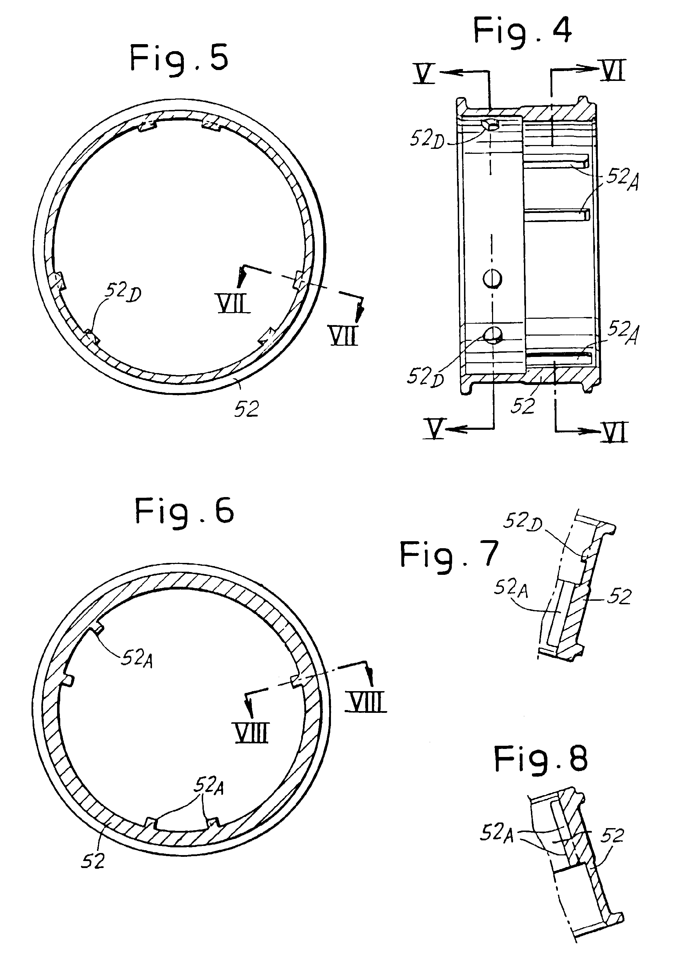

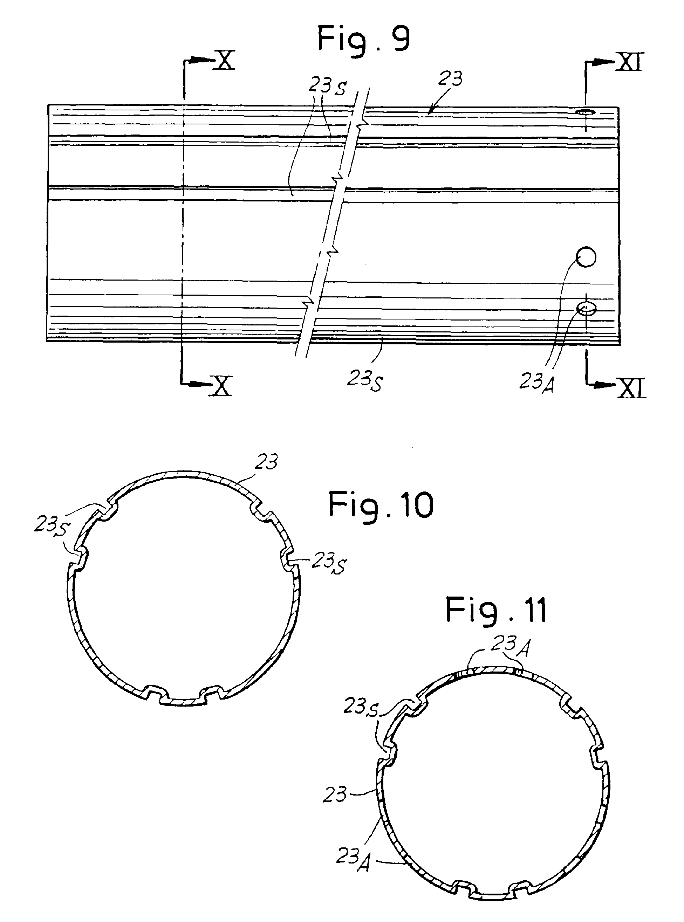

As illustrated in the drawing, in the first place the sheath 23 coupled to the component 129A, 129B of the protective boot 27 does not have a circular cylindrical wall but a splined profile (see Figs 9-11) with external splines 23S that are easy to produce by drawing; the sheath 23 is received in the collar 129A and fixed to it by means of holes 23A in the tubular sheath 23 (similar to the holes 21A of the sheath 21) and chamfered pins 129D (similar to the pins 29D of the collar 29A). In the second place, as the drawing shows, a sleeve 52 (also shown in isolation in Figs 4-8) is engaged on the free end of the tubular sheath 21 of circular cross section. Said sleeve 52 comprises a series of internal longitudinal teeth 52A designed to engage in and slide along the external splines 23S, thereby producing a rotary engagement between the two sheaths 21 and 23 which continue to be able to slide axially relative to each other. The attachment of the sleeve 52 to the sheath 21 can be done in a similar way to the attachment of the sheath 21 to the collar 29A (and of the sheath 23 to the collar 129A) by means of holes 221A (similar to the holes 21A) that can be seen in Fig. 2 and chamfered pins 52D (similar to the pins 29D), for a snap engagement of the partly elastic wall of the sheath 21.

With this simple arrangement by using the sleeve 52 (which can easily be produced as a molding) and replacing an ordinary tubular sheath of circular cross section with the longitudinally splined sheath 23 (which can be produced by drawing), it is possible to prevent relative rotation between the two sheaths 21 and 23 and hence between the two boots 25 and 26 of the extensible guard. Consequently, attachment by a single chain 20 is sufficient to prevent spontaneous rotation of the complete guard 25, 5, 7, 27 of the telescopic cardan shaft.

In a possible alternative, angular rotation between the two sheaths 21 and 23 can be prevented without the sheath 52 by also giving the sheath 21 a splined profile with longitudinal internal ridges that combine with the external splines of the sheath 23, employing suitable profiling of the cross sections of the sheaths such that the sheath 21 can be coupled to the collar 29A in much the same way as described before.

It will be understood that the drawing shows only an example given purely as a practical demonstration of the invention, which invention can be varied in its shape and arrangements without thereby departing from the scope of the concept on which the invention is based. The presence of any reference numbers in the appended claims is for the purpose of facilitating the reading of the claims with reference to the description and drawing, and does not limit the scope of protection represented by the claims.

## Claims

1. A cardan shaft, especially one that is telescopic, with a guard comprising two telescopic sheaths around the shaft and protective boots around the shaft end-forks belonging to the respective universal joints, said guard being supported by the base of each of said forks and chain means being provided to prevent spontaneous rotation of the guard, characterized in that the two telescopically sliding sheaths are coupled by splined profiling to prevent relative angular movement, so that only one chain is required to prevent spontaneous rotation of the guard.

2. Cardan shaft according to claim 1, characterized in that only the inner protective sheath (23) is made with splined profiling (23S) and in that a sleeve (52) with teeth (52A) that lock into and slide along the splined profiling (23S) of the inner protective sheath (23) is engaged on the end of the other or outer protective sheath (21), which is a cylinder of circular section.

3. Cardan shaft according to claim 2, characterized in that said sleeve (52) is engaged on said outer protective sheath (21) by means of holes (221 A) in the wall of the sheath and pins (52D) in said sleeve (52).

4. Cardan shaft according to claim 2, characterized in that in said inner protective sheath (23) the splines (23S) are formed in pairs by drawing the sheath with an essentially constant thickness.

5. Cardan shaft with a guard that can be fixed in position by a single action, the whole as described above and as illustrated by way of example in the accompanying drawing.
